**Europäisches Patentamt**

(19) **European Patent Office**

**Office européen des brevets**

(11) Veröffentlichungsnummer: **0 013 933**
**B1**

(12) # EUROPÄISCHE PATENTSCHRIFT

(45) Veröffentlichungstag der Patentschrift:
16.09.81

(51) Int. Cl.³: **C 03 B 23/02**, B 66 C 13/52,
B 60 J 1/00, E 06 B 3/02

(21) Anmeldenummer: 80100196.7

(22) Anmeldetag: 16.01.80

(54) **Vorgespannte Silikatglasscheibe, ihre Verwendung und Vorrichtungen zur Herstellung einer solchen Silikatglasscheibe.**

(30) Priorität: 19.01.79 DE 2901960
12.05.79 DE 2919246

(43) Veröffentlichungstag der Anmeldung:
06.08.80 Patentblatt 80/16

(45) Bekanntmachung des Hinweises auf die Patenterteilung:
16.09.81 Patentblatt 81/37

(84) Benannte Vertragsstaaten:
AT BE DE FR GB IT NL SE

(56) Entgegenhaltungen:
DE-A-1 596 399
DE-A-2 152 333
DE-A-2 231 512
DE-C-1 131 369
DE-U-1 976 282
GB-A-1 463 062
US-A-3 256 080
US-A-4 047 915

(73) Patentinhaber: Saint-Gobain Vitrage, 62, Bd. Victor-Hugo,
F-92209 Neuilly-sur-Seine (FR)

(84) Benannte Vertragsstaaten: BE FR GB IT NL SE AT

(73) Patentinhaber: Vereinigte Glaswerke GmbH,
Viktoriaallee 3-5, D-5100 Aachen (DE)

(84) Benannte Vertragsstaaten: DE

(72) Erfinder: Scheufen, Hubert, Schweyer Strasse 2,
D-51200 Herzogenrath (DE)
Erfinder: Scholl, Herbert, Hainbuchenweg 20,
D-5100 Aachen (DE)
Erfinder: Siemonsen, Hans-Peter, Dr.,Ing., Hasenfeld 16,
D-5100 Aachen (DE)
Erfinder: Schmidt, Günther, Ing., Uersfeld 29,
D-5100 Aachen (DE)
Erfinder: Kelleter, Franz-Josef, Bardenbergerstrasse 80,
D-51200 Herzogenrath (DE)
Erfinder: Paffen, Heinz, Oststrasse 19,
D-51200 Herzogenrath (DE)

(74) Vertreter: Biermann, Wilhelm, Dr.-Ing., Vereinigte
Glaswerke GmbH Viktoriaallee 3-5, D-5100 Aachen (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Vorgespannte Silikatglasscheibe, ihre Verwendung und Vorrichtungen zur Herstellung einer solchen Silikatglasscheibe

Die Erfindung betrifft eine vorgespannte Silikatglasscheibe, insbesondere eine auf thermischem Wege vorgespannte Silikatglasscheibe, die in beiden Flächendimensionen mit einer beispielsweise sphärischen Auswölbung versehen ist, und deren Randbereich umlaufend in einer Ebene liegen. Sie umfasst ferner ihre Verwendung sowie verschiedene Vorrichtungen zur Herstellung solcher Silikatglasscheiben.

Vorgespannte Silikatglasscheiben mit einem umlaufenden ebenen Randbereich und einer beispielsweise parabolischen oder sphärischen Auswölbung sind aus der DE-A-21 52 333 bekannt. Die Auswölbungen dieser bekannten Glasscheiben haben relativ grosse Stichhöhen, da der gewölbte Charakter der Glasscheiben optisch bewusst in Erscheinung treten soll. Diese bekannten Glasscheiben sollen nämlich in erster Linie im Bausektor Verwendung finden, beispielsweise als Relieftafeln, Brüstungselemente oder Lichtkuppeln, oder auch als Spülbecken, Waschbecken oder Springbrunnenbecken.

Aus der De-A-21 52 333 ist auch eine Vorrichtung zum Herstellen einer gewölbten Glasscheibe mit umlaufendem ebenen Rand bekannt, bei der die beiden gegeneinanderbewegbaren Presswerkzeuge jeweils eine starre Grundplatte und eine daran befestigte Rahmenform mit ebener Pressfläche umfassen, wobei die beiden Pressflächen der Rahmenformen deckungsgleich sind und am Umfang der Glasscheibe angreifen, und bei der zwischen der Grundplatte und der Rahmenform eines der Presswerkzeuge ein relativ zur Rahmenform senkrecht zur Glasscheibe verschiebbares Biegewerkzeug angeordnet ist, dessen Biegefläche zumindest teilweise aus der Kontaktebene zwischen Rahmenform und Glasscheibe heraustreten kann.

Im Gegensatz zu diesen bekannten gewölbten Glasscheiben betrifft die Erfindung eine Glasscheibe, bei der der gewölbte Charakter optisch nicht in Erscheinung treten soll, d.h. mit anderen Worten eine Glasscheibe, die wie eine ebene Glasscheibe verwendet und eingesetzt wird. Bei solchen ebenen Glasscheiben spielt in vielen Fällen die Formstabilität der Glasscheibe eine Rolle. Beispielsweise ist das der Fall, wenn die Glasscheibe als rahmenloses Fenster Verwendung finden soll, indem sie an einer Seite mit einem Drehbeschlag und an der gegenüberliegenden Seite mit einem verschliessbaren Griff versehen ist, und zum Zweck der Abdichtung gegen eine sich an den Randbereich anlegende Gummidichtung angedrückt wird. Doch nicht nur in diesem Fall, sondern auch bei anderen Anwendungsfällen kann eine gute Formstabilität von Bedeutung sein.

Thermisch vorgespannte Glasscheiben weisen in aller Regel im Randbereich höhere Druckspannungen auf als im Mittelfeld, was durch die schnellere Abkühlung im Randbereich bedingt ist. In vielen Fällen wird sogar absichtlich eine besonders hohe Randspannung erzeugt. Das trifft z.B. dann zu, wenn derartige Glasscheiben als Windschutzscheiben für Kraftfahrzeuge eingesetzt werden. In diesem Fall wird das Mittelfeld langsamer gekühlt, um hier grössere Bruchstücke bei einem Bruch der Glasscheibe zu erzeugen, die eine bessere Durchsicht gestatten. Entsprechend dem Vorspannungsgradienten steht das Mittelfeld von vorgespannten Glasscheiben immer unter einer mehr oder weniger ausgeprägten «Trommelfellspannung», die durch den stärker vorgespannten Randbereich im Gleichgewicht gehalten wird.

Dieser zwangsläufig auftretende oder auch gezielt bewirkte Spannungsaufbau hat bei planen Glasscheiben einen Effekt zur Folge, der im folgenden als «Flip-Flop-Effekt» bezeichnet wird und der die Formstabilität der Glasscheibe nachteilig beeinflusst. Dieser Flip-Flop-Effekt besteht darin, dass die Glasscheibe schon bei relativ geringen, manchmal sogar schon bei minimalen Belastungen aus einer stabilen, gegenüber der Ebene leicht verzogenen Form in eine andere entgegengesetzt gerichtete verzogene Form «umkippt».

Je nach Grösse der Glasscheibe kann die durch diesen Effekt hervorgerufene Abweichung von der ebenen Form lokal einige Millimeter bis etwa 1,5 Zentimeter betragen. Solche Formänderungen können zur Folge haben, dass die Glasscheiben, wenn sie als rahmenlose Fenster eingesetzt sind, sich nicht auf ihrem ganzen Umfang an die Gummidichtung anlegen.

Auch bei am Rand fest eingebauten Glasscheiben kann eine erhöhte Formhaltigkeit der Glasscheibe aus verschiedenen Gründen erwünscht und vorteilhaft sein.

Bei den bekannten gebogenen Glasscheiben mit relativ grosser Stichhöhe der Auswölbung treten die genannten Probleme nicht auf, weil einerseits die Gestaltssteifigkeit gewölbter bzw. gebogener Glasscheiben von Haus aus grösser ist und weil andererseits der im Randbereich durch die «Trommelfellspannung» überlagerte Druckspannungsring stets im Sinne einer weiteren Auswölbung der bereits vorhandenen Biegung wirkt.

Der Erfindung liegt die Aufgabe zugrunde, eine ihrem Aussehen und ihrem Verwendungszweck nach plane vorgespannte Glasscheibe so auszubilden, dass ihre Formstabilität erhöht und der geschilderte «Flip-Flop-Effekt» unterdrückt wird.

Gemäss der Erfindung wird diese Aufgabe dadurch gelöst, dass die Stichhöhe der Auswölbung etwa 0,5 bis 3,0% der kleineren Flächenabmessung beträgt. Vorzugsweise beträgt die Stichhöhe der Auswölbung 1,8 bis 2,2% der kleineren Flächenabmessung.

Eine Glasscheibe mit den erfindungsgemässen Merkmalen bietet für das Auge das Bild einer planen Glasscheibe, denn die ausserordentlich geringe Auswölbung ist für das Auge nicht ohne weiteres zu erkennen. Da andererseits der Rand der Glasscheibe in einer ebenen Fläche liegt, können solche Glasscheiben ohne jede Schwierigkeit in Rahmen oder Halterungen für plane Glasscheiben eingesetzt werden, so dass Änderungen am Rahmen oder an den Halterungen nicht erforderlich sind.

Erfindungsgemässe Glasscheiben können beispielsweise umfangreiche Anwendung finden für die Verglasung von landwirtschaftlichen oder anderen Nutzfahrzeugen oder für die Verglasung von Schutzkabinen aller Art. Sie bieten über die erwähnte verbesserte Formbeständigkeit hinaus noch wesentliche andere Vorteile. Hierzu gehört z.B. eine weniger störende Blendwirkung, da das Auge nur von einem Teil der von der Glasscheibe reflektierten Lichtstrahlen getroffen wird. Wenn die Glasscheiben als Windschutzscheiben eingesetzt werden, und zwar mit der Wölbung nach aussen, wird dadurch auch eine bessere Anlage des Scheibenwischerblattes auf dessen ganzer Länge erreicht. Schliesslich kann man, ebenfalls bei der Anwendung des Erfindungsprinzips für die Herstellung von Windschutzscheiben, die für die Durchsicht nach Bruch der Windschutzscheibe erforderliche Bruchstruktur besser beherrschen, weil Glasscheiben, die vor dem schroffen Abkühlen einem gezielten Verformungsvorgang unterzogen werden, auf eine höhere Temperatur erhitzt werden können. Plane Glasscheiben hingegen dürfen nicht so stark erhitzt werden, da sonst leicht unkontrollierte Verformungen auftreten können.

Die gewünschten Vorteile ergeben sich in besonderem Masse bei Glasscheiben, deren Flächenabmessungen zwischen etwa 60 und 140 cm betragen. Insbesondere rechteckige Glasscheiben mit ggf. abgerundeten Ecken, deren Breite etwa 60 bis 100 cm und deren Länge etwa 100 bis 140 cm beträgt, können erfindungsgemäss ausgebildet sein.

In Weiterbildung der Erfindung kann der Randbereich der Glasscheibe auf einer Breite von 2 bis 3 Zentimetern eben ausgebildet sein. Eine erfindungsgemäss ausgebildete Vorrichtung besteht aus zwei Presswerkzeugen und zeichnet sich, ausgehend von der eingangs beschriebenen bekannten Vorrichtung, dadurch aus, dass die Rahmenformen an der Grundplatte jeweils über einstellbare Abstandshalter (Bolzen) befestigt sind und dass das verschiebbare Biegewerkzeug auf Gleitführungen (Buchsen, Bolzen) zwischen zwei durch auf den Bolzen angeordnete Anschlagringe festgelegte Endstellungen verschiebbar ist.

Eine andere vorteilhafte Vorrichtung ist, ebenfalls ausgehend von der eingangs beschriebenen bekannten Vorrichtung, dadurch gekennzeichnet, dass die Rahmenformen an der Grundplatte jeweils über einstellbare Abstandshalter befestigt sind, dass das verschiebbare Biegewerkzeug aus einem bei Beaufschlagung mit Druckluft sein Volumen vergrössernden Kissen mit einer flexiblen Abschlusswand besteht und dass zur Begrenzung der Bewegung der flexiblen Abschlusswand ein den Luftdruck regulierendes einstellbares Reduzierventil und ein die Druckeinwirkungsdauer bestimmendes einstellbares Zeitschaltwerk in der Druckluftzuleitung angeordnet sind.

Die Erfindung wird nachfolgend an Hand verschiedener Beispiele für erfindungsgemäss ausgebildete Glasscheiben sowie an Hand der Zeichnungen näher beschrieben. Von den Zeichnungen zeigt

Fig. 1 eine erste Ausführungsform einer Presse zur Herstellung der erfindungsgemässen Glasscheiben, mit einer starren kalottenartigen Biegeform, und

Fig. 2 eine zweite Ausführungsform einer Presse mit einem flexiblen pneumatischen Biegewerkzeug.

Beispiel 1

Eine 4,65 mm dicke rechteckige Floatglasscheibe mit den Abmessungen 131×74 cm wird, an selbstklemmenden zangenförmigen Aufhängevorrichtungen hängend, in einem Ofen auf etwa 650 Grad Celsius erwärmt. Die erwärmte Glasscheibe wird in eine Biegepresse zwischen zwei Presswerkzeuge gebracht, von denen die Patrize eine sphärische Oberfläche mit einem Radius von etwa 800 cm aufweist und die Matrize einen die Glasscheibe am Rand fassende plane Rahmenbiegeform ist. Nach dem Positionieren der Glasscheibe in der Presse werden die Presswerkzeuge so weit aufeinander zu bewegt, bis die Patrize die Glasscheibe in der Mitte um 7 mm, bezogen auf die Kantenebene auf der konkaven Seite, ausgewölbt hat. Die Kanten der Glasscheibe stützen sich auf ihrem gesamten Umfang an der ebenen Rahmenform ab und bleiben so in einer Ebene. Die so ausgewölbte Glasscheibe wird anschliessend in einer für plane Glasscheiben üblichen Abblasvorrichtung abgeschreckt und erhält dadurch ihre Vorspannung.

Bei der so hergestellten Glasscheibe wird die Durchbiegung unter verschiedenen Belastungen gemessen. Ebenso wird unter denselben Belastungsbedingungen bei einer nicht ausgewölbten, d.h. streng planen, vorgespannten Glasscheibe gleicher Abmessungen die Durchbiegung gemessen. Zu diesem Zweck werden die Glasscheiben auf zwei Auflagerböcke aufgelegt, deren obere Kanten, auf die die Glasscheiben aufgelegt werden, einen gegenseitigen Abstand von 104 cm aufweisen. Die Glasscheibe wird durch Auflage von Gewichten in der Mitte der Glasscheibe belastet. Das Ergebnis dieser Vergleichsversuche zeigt folgende Tabelle, wobei in der senkrechten Spalte A die Werte für eine plane Glasscheibe von 4,65 mm Dicke, in der Spalte B die Werte für die beschriebene leicht ausgewölbte Glasscheibe derselben Dicke mit der konkaven Oberfläche nach oben, und in der Spalte C die Werte für die beschriebene leicht ausgewölbte Glasscheibe mit der konvexen Seite nach oben wiedergegeben sind:

## Tabelle 1

| Last (N) | Durchbiegung (mm) | | |
| | A | B | C |
|---|---|---|---|
| 50 | 2,6 | 3,2 | 1,2 |
| 100 | 5,0 | 6,5 | 2,2 |
| 150 | 7,5 | 10,0 | 3,2 |
| 200 | 10,0 | 13,3 | 4,3 |

Beispiel 2

Es wird eine 4,65 mm dicke rechteckige Floatglasscheibe mit den Abmessungen 131×74 cm wie in Beispiel 1 beschrieben hergestellt, wobei sie in der Presse so weit ausgewölbt wird, dass die Stichhöhe in der Mitte der Glasscheibe 15 mm beträgt. Auch bei dieser stärker ausgewölbten Glasscheibe, die für das Auge immer noch das Aussehen einer planen Glasscheibe hat, wird das Ausmass der Durchbiegung unter steigender Belastung gemssen und den Werten gegenübergestellt, die sich an einer gleich dicken planen vorgespannten Glasscheibe ergeben. Die nachfolgende Tabelle 2 zeigt wiederum in der Spalte A die Grösse der Durchbiegung bei einer planen Glasscheibe, in der Spalte B die Grösse der Durchbiegung der ausgewölbten Glasscheibe mit der Belastung auf der konkaven Seite, und in der Spalte C die Grösse der Durchbiegung der ausgewölbten Glasscheibe bei Belastung auf der konvexen Seite.

## Tabelle 2

| Last (N) | Durchbiegung (mm) | | |
| | A | B | C |
|---|---|---|---|
| 50 | 2,6 | 2,2 | 0,3 |
| 100 | 5,0 | 4,3 | 0,7 |
| 150 | 7,5 | 6,8 | 1,1 |
| 200 | 10,0 | 9,0 | 1,4 |

Aus den Tabellen 1 und 2 ist erkennbar, dass die Belastbarkeit einer erfindungsgemässen Glasscheibe auf der konvexen Seite um ein Mehrfaches höher ist als die einer planen Scheibe gleicher Dicke. Hinzu kommt, dass die erfindungsgemässe Scheibe den sogenannten «Flip-Flop-Effekt» bei keiner Beanspruchungsart mehr aufweist.

Beispiel 3

Es werden leicht ausgewölbte Glasscheiben wie in Beispiel 1 und 2 beschrieben hergestellt. Diese Glasscheiben finden als ausstellbare rahmenlose Windschutz-, Rückwand- und Seitenscheiben für Schutzkabinen von Schleppern, Erntemaschinen oder Sondertransportmaschinen Anwendung. Sie werden zu diesem Zweck an einer Seite, vorzugsweise an der Oberseite, mit zwei Scharnieren versehen, die an vor dem Vorspannen der Glasscheibe angebrachten Lochbohrungen an dieser befestigt werden. Auf der den Scharnieren gegenüberliegenden Seite wird in der Mitte ein von Hand zu betätigender Verschlussmechanismus angebracht. Die Auswölbung der Glasscheibe liegt auf der Aussenseite der Kabine. Im verschlossenen Zustand liegt der Randbereich der Glasscheibe fest und dicht an einer umlaufenden Gummidichtung an.

Vorrichtungen zum Herstellen der Glasscheiben Bei den Vorrichtungen zum Herstellen der erfindungsgemässen Glasscheiben weisen beide Presswerkzeuge eine ebene Rahmenform auf, zwischen denen die Glasscheibe vor ihrer Verformung festgehalten wird.

Wie aus den Zeichnungen zu ersehen ist, soll die rechteckige Silikatglasscheibe 1 mit einer leichten Auswölbung versehen werden, die eine Stichhöhe von etwa 2% bezogen auf die Länge der kleineren Seite aufweist, während der Randbereich der Glasscheibe 1 entlang dem gesamten Umfang in einer Ebene verbleiben soll. Die Glasscheibe befindet sich auf einer Temperatur von etwa 650 Grad Celsius, und wird an nicht dargestellten zangenförmigen Greifvorrichtungen hängend aus dem Ofen, in dem sie auf die Biegetemperatur erwärmt wird, zwischen die beiden Werkzeuge 2 und 3 eingebracht, die der Glasscheibe die gewünschte Form erteilen.

Das Presswerkzeug 2 umfasst einen in horizontaler Richtung verfahrbaren Schlitten 4, an dem die sich vertikal erstreckende Grundplatte 5 angeordnet ist. Über teilweise mit einem Gewinde versehene Bolzen 6 ist im Abstand von der Grundplatte 5 ein Metallrahmen 7 befestigt. Mit Hilfe von Befestigungsmuttern 8 kann die Lage der Bolzen 6 in der Grundplatte 5, und damit die Gestalt des Rahmens 7, gegebenenfalls eingestellt oder korrigiert werden. Der Rahmen 7 soll so ausgerichtet sein, dass die Kontaktfläche 9 des Rahmens in einer Ebene liegt.

Das Presswerkzeug 3 umfasst ebenfalls einen in horizontaler Richtung verschiebbaren Schlitten 4 und eine an diesem Schlitten angeordnete Grundplatte 15. Auch an dieser Grundplatte 15 ist über Bolzen 16 ein Rahmen 17 angebracht, dessen Gestalt durch Muttern 18 in gewissen Grenzen korrigiert werden kann. Der Rahmen 17 ist deckungsgleich mit dem Rahmen 7. Die Kontaktfläche 19 des Rahmens 17 liegt wiederum in einer Ebene. Der Rahmen 17 ist parallel zum Rahmen 7 angeordnet. Beim Zusammenfahren der Presswerkzeuge 2 und 3 wird durch die Rahmen 7 und 17 der Randbereich der Glasscheibe 1 auf beiden Seiten erfasst und auf diese Weise in seiner ursprünglichen Ebene festgehalten. Die Rahmen 7 und 17 haben eine Breite B von grössenordnungsmässig 20 cm. Dadurch wird es möglich, in gewissen Grenzen unterschiedlich grosse Glasscheiben bei ein und derselben Rahmenabmessung mit einer Auswölbung zu versehen.

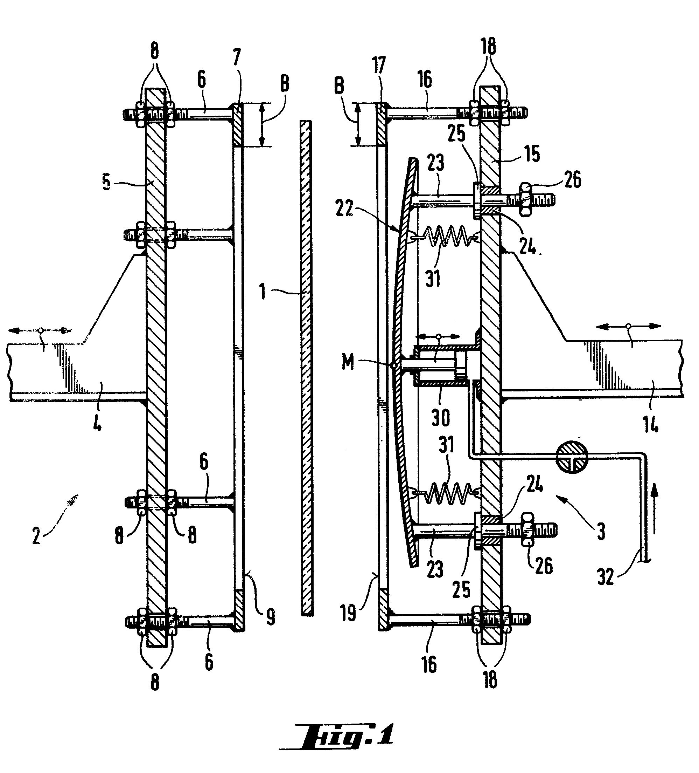

Bei der in Fig. 1 dargestellten Ausführungsform ist in dem Raum zwischen der Grundplatte 15 und der durch den Rahmen 17 bestimmten Ebene ein vollflächiges starres Biegewerkzeug 22 mit einer kugelkalottenförmigen Oberfläche senkrecht zur Glasscheibe 1 beweglich angeordnet. Der Krümmungsradius dieser kugelkalottenförmigen Oberfläche beträgt etwa 800 cm. Das Biegewerkzeug 22 kann aus einem entsprechend geformten Aluminiumblech bestehen. Es ist mit Hilfe von Bolzen 23 gelagert, die in in der Grundplatte 15 angeordneten Buchsen 24 zwischen zwei Endstellungen verschiebbar gelagert sind. Die eine Endstellung, bei der sich das Biegewerkzeug 22 in seiner zurückgezogenen Stellung hinter der durch die Kontaktfläche 19 bestimmten Ebene befindet, wird durch auf den Bolzen 23 angeordnete Anschlagringe 25 bestimmt. Die andere Endstellung wird bestimmt durch auf den Bolzen 23 verstellbare Muttern 26. Mit Hilfe dieser Muttern 26 kann die sogenannte «Stichhöhe» der Auswölbung eingestellt werden, d.h. das Mass, um das der Mittelpunkt M des Biegewerkzeuges 22 in seiner vorderen Endstellung über die durch die Kontaktfläche 19 bestimmte Ebene vorsteht. Die Kontaktfläche des Biegewerkzeuges 22 ist ebenso wie die Kontaktflächen 9 und 19 der Rahmen 7 und 17 mit einem Glasseidengewebe überzogen, wie es bei Biegewerkzeugen üblich ist.

Die Verschiebung des Biegewerkzeuges 22 wird bewirkt einerseits auf pneumatischem Wege durch die Anordnung eines Druckzylinders 30, und andererseits durch Zugfedern 31, die das Biegewerkzeug 22 in die zurückgezogene Endstellung bringen, sobald der Druckzylinder 30 entlüftet wird. Über einen Anschlussstutzen 32 ist der Druckzylinder 30 unter Zwischenschaltung eines automatisch gesteuerten Ventils an die Druckluftleitung angeschlossen.

Der Arbeitsablauf ist wie folgt: Die Presswerkzeuge 2 und 3 befinden sich in geöffneter Stellung. In dieser Stellung wird die Glasscheibe 1 zwischen die Presswerkzeuge eingebracht. Sobald die Glasscheibe 1 positioniert ist, werden die Presswerkzeuge 2 und 3 gleichzeitig aufeinanderzu bewegt, so dass die Kontaktflächen 9 und 19 gleichzeitig die Glasscheibe 1 am Rand erfassen und festhalten. Unmittelbar darauf wird der Druckzylinder 30 mit Druckluft beaufschlagt und bewegt das Biegewerkzeug 22 in Richtung auf das Presswerkzeug 2 bis zu seiner durch die Anschläge 26 bestimmten Endstellung. Nach Erreichen der Endstellung wird der Druckzylinder 30 entlüftet, worauf das Biegewerkzeug 22 unter der Wirkung der Federn 31 in seine Ausgangsstellung zurückfährt. Darauf werden Presswerkzeuge 2 und 3 wieder voneinander entfernt, und die nun mit der gewünschten Auswölbung versehene Glasscheibe 1 wird in die Vorspannstation transportiert, wo sie durch schroffes Abkühlen mit Luft auf thermischem Wege vorgespannt wird.

Anstelle des Druckzylinders 30 kann auch ein aufblasbares, sein Volumen vergrösserndes Luftkissen zwischen der starren Biegeform 22 und der Grundplatte 15 angeordnet sein. Das Luftkissen kann zweckmässig aus einem elastischen Material wie Gummi bestehen und die Form eines Faltenbalges aufweisen.

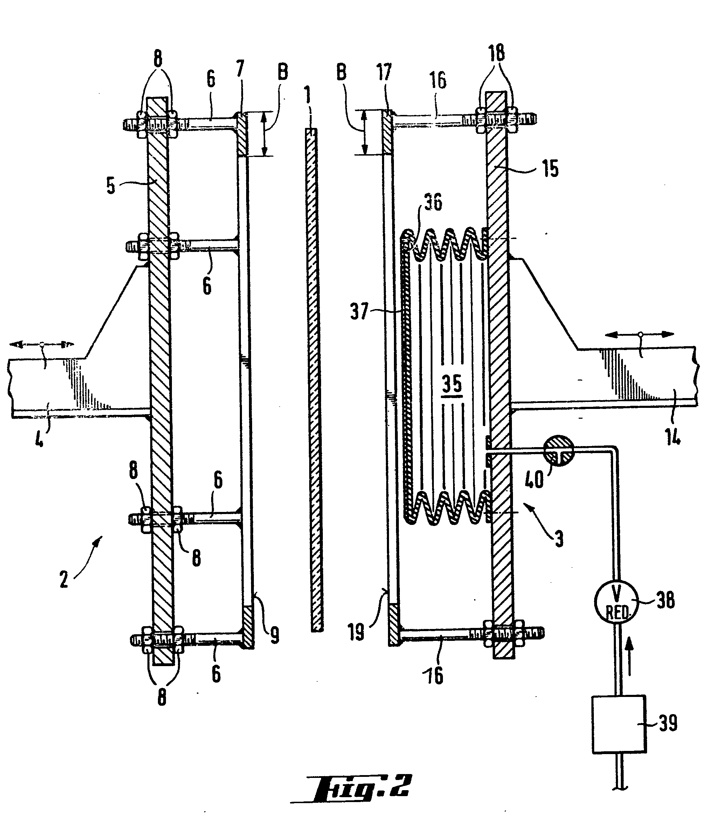

Bei der in Fig. 2 dargestellten Ausführungsform ist zwischen dem Rahmen 17 und der Grundplatte 15 als Biegewerkzeug ein aufblasbares Luftkissen 35 in Form eines Faltenbalges angeordnet, dessen vordere Abschlusswand 36 sich ohne Zwischenschaltung einer starren Biegeform bei Beaufschlagung mit Druckluft gegen die Oberfläche der Glasscheibe 1 anlegt. Auf der Abschlusswand 36 ist aussen eine Isolierschicht 37 angeordnet, um das kautschukartige Material des Luftkissens 35 vor zu starker Erwärmung durch direkte Berührung mit der erhitzten Glasscheibe zu schützen. Als Isolierschicht eignet sich insbesondere eine mehrlagige Schicht aus einem Glasfasergewebe. Infolge der Elastizität der Abschlusswand 36 und der Einspannung der Glasscheibe 1 zwischen den Rahmen 7 und 17 bildet sich bei Beaufschlagung des Luftkissens mit Druckluft eine Auswölbung der Glasscheibe aus, die der gewünschten Form entspricht, wobei der Wölbungsradius u.a. von der Grösse der Rahmen 7, 17 abhängig ist. Auf diese Weise können mit ein und demselben Biegewerkzeug unterschiedliche Wölbungen erzeugt werden.

Die mit Hilfe des Luftkissens 35 erzeugte Auswölbung der Glasscheibe lässt sich im übrigen weitgehend beeinflussen durch die Höhe des angewandten Luftdruckes und durch die Zeitdauer der Beaufschlagung. Die Grössen werden zweckmässig für jede Scheibengrösse zuvor empirisch ermittelt. An Hand dieser empirisch ermittelten Werte werden einerseits ein Reduzierventil 38 und andererseits ein Zeitschaltwerk 39 entsprechend eingestellt. Nach der Entlüftung des Luftkissens 35 über ein Entlüftungsventil 40 nimmt das Luftkissen seine Ausgangsform aufgrund seiner elastischen Eigenschaften von selbst wieder an, so dass zusätzliche Mittel zum Zurückstellen des Biegewerkzeugs nicht vorgesehen zu werden brauchen.

**Patentansprüche**

1. Vorgespannte Silikatglasscheibe, die in beiden Flächendimensionen mit einer beispielsweise sphärischen Auswölbung versehen ist, und deren Randbereiche umlaufend in einer Ebene liegen, dadurch gekennzeichnet, dass die Stichhöhe der Auswölbung etwa 0,5 bis 3,0% der kleineren Flächenabmessung beträgt.

2. Vorgespannte Glasscheibe nach Anspruch 1, dadurch gekennzeichnet, dass die Stichhöhe der Auswölbung 1,8 bis 2,2% der kleineren Flächenabmessung beträgt.

3. Vorgespannte Glasscheibe nach Anspruch 1 oder 2, dadurch gekennzeichnet, dass die Auswölbung auf der ganzen Fläche einen im wesentlichen gleichbleibenden Biegeradius aufweist.

4. Vorgespannte Glasscheibe nach einem der Ansprüche 1 bis 3, dadurch gekennzeichnet, dass die Flächenabmessungen der Glasscheibe mehr als etwa 40×40 cm betragen.

5. Vorgespannte Glasscheibe nach Anspruch 4, dadurch gekennzeichnet, dass die Flächenabmessungen der Glasscheibe zwischen etwa 60 und 140 cm betragen.

6. Vorgespannte Glasscheibe nach einem der Ansprüche 1 bis 5, dadurch gekennzeichnet, dass ihr umlaufender ebener Randbereich eine Breite von etwa 2 bis 3 cm aufweist.

7. Vorgespannte Glasscheibe nach einem der Ansprüche 1 bis 6, dadurch gekennzeichnet, dass die Glasscheibe im Randbereich eine grössere Vorspannung aufweist als im Mittelfeld.

8. Vorgespannte Glasscheibe nach Anspruch 7, dadurch gekennzeichnet, dass die Vorspannung im Randbereich 12 000 bis 13 500 N/cm², und im Mittelfeld 7 000 bis 9 000 N/cm² beträgt.

9. Vorgespannte Glasscheibe nach einem der Ansprüche 1 bis 8, dadurch gekennzeichnet, dass die Dicke der Glasscheibe 3 bis 6 mm beträgt.

10. Verwendung einer vorgespannten Glasscheibe nach einem der Ansprüche 1 bis 9 als Fensterscheibe für Kraftfahrzeuge und Schutzkabinen.

11. Verwendung einer vorgespannten Glasscheibe nach Anspruch 10, dadurch gekennzeichnet, dass die Glasscheibe mit der Auswölbung nach aussen montiert wird.

12. Verwendung einer vorgespannten Glasscheibe nach Anspruch 10 oder 11 als aufklappbare rahmenlose Glasscheibe.

13. Vorrichtung zum Herstellen einer gewölbten Silikatglasscheibe nach einem der Ansprüche 1 bis 9, bei der die beiden gegeneinanderbewegbaren Presswerkzeuge (2, 3) jeweils eine starre Grundplatte (5, 15) und eine daran befestigte Rahmenform (7, 17) mit ebener Pressfläche umfassen, wobei die beiden Pressflächen der Rahmenformen (7, 17) deckungsgleich sind und am Umfang der Glasscheibe (1) angreifen, und bei der zwischen der Grundplatte (15) und der Rahmenform (17) eines der Presswerkzeuge (3) ein relativ zur Rahmenform (17) senkrecht zur Glasscheibe (1) verschiebbares Biegewerkzeug (22) angeordnet ist, dessen Biegefläche zumindest teilweise aus der Kontaktebene zwischen Rahmenform (17) und Glasscheibe (1) heraustreten kann, dadurch gekennzeichnet, dass die Rahmenformen (7, 17) an der Grundplatte (5, 15) jeweils über einstellbare Abstandshalter (Bolzen 6, 16) befestigt sind und dass das verschiebbare Biegewerkzeug (22) auf Gleitführungen (Buchsen 24, Bolzen 23) zwischen zwei durch auf den Bolzen (23) angeordnete Anschlagringe (25, 26) festgelegten Endstellungen verschiebbar ist.

14. Vorrichtung nach Anspruch 13, dadurch gekennzeichnet, dass die Kontaktflächen (9, 19) der Rahmenformen (7, 17) eine Breite (B) von 5 bis 25 cm aufweisen.

15. Vorrichtung nach Anspruch 13 oder 14, dadurch gekennzeichnet, dass das Biegewerkzeug (22) als starre Platte mit einer kalottenförmigen Oberfläche ausgebildet ist.

16. Vorrichtung nach einem der Ansprüche 13 bis 15, dadurch gekennzeichnet, dass die die vordere Endstellung des starren Biegewerkzeugs (22) bestimmenden Anschlagringe (26) auf den Bolzen (23) verstellbar angeordnet sind.

17. Vorrichtung nach einem der Ansprüche 13 bis 16, dadurch gekennzeichnet, dass zur Verschiebung des starren Biegewerkzeugs (22) in die vordere Endstellung ein Druckzylinder (30) oder ein bei Beaufschlagung mit Druckluft sein Volumen vergrösserndes Kissen zwischen dem starren Biegewerkzeug (22) und der Grundplatte (15) vorgesehen ist.

18. Vorrichtung nach Anspruch 17, dadurch gekennzeichnet, dass zur Bewegung des starren Biegewerkzeugs (22) in die hintere Endstellung an dem Biegewerkzeug (22) und an der Grundplatte (15) angreifende Zugfedern (31) vorgesehen sind.

19. Vorrichtung zum Herstellen einer gewölbten Silikatglasscheibe nach einem der Ansprüche 1 bis 9, bei der die beiden gegeneinanderbewegbaren Presswerkzeuge (2, 3) jeweils eine starre Grundplatte (5, 15) und eine daran befestigte Rahmenform (7, 17) mit ebener Pressfläche umfassen, wobei die beiden Pressflächen der Rahmenformen (7, 17) deckungsgleich sind und am Umfang der Glasscheibe (1) angreifen, und bei der zwischen der Grundplatte (15) und der Rahmenform (17) eines der Presswerkzeuge (3) ein relativ zur Rahmenform (17) senkrecht zur Glasscheibe (1) verschiebbares Biegewerkzeug angeordnet ist, dessen Biegefläche zumindest teilweise aus der Kontaktebene zwischen Rahmenform (17) und Glasscheibe (1) heraustreten kann, dadurch gekennzeichnet, dass die Rahmenformen (7, 17) an der Grundplatte (5, 15) jeweils über einstellbare Abstandshalter (Bolzen 6, 16) befestigt sind, dass das verschiebbare Biegewerkzeug aus einem bei Beaufschlagung mit Druckluft sein Volumen vergrössernden Kissen (35) mit einer flexiblen Abschlusswand (36) besteht und dass zur Begrenzung der Bewegung der flexiblen Abschlusswand (36) ein den Luftdruck regulierendes einstellbares Reduzierventil (38) und ein die Druckeinwirkungsdauer bestimmendes einstellbares Zeitschaltwerk (39) in der Druckluftzuleitung angeordnet sind.

**Revendications**

1. Feuille de verre au silicate trempée, présentant un bombé par exemple sphérique dans ses deux dimensions du plan et dont les zones de bordure périphériques sont situées dans un plan, caractérisée en ce que la flèche du bombé est d'environ 0,5 à 3,0% de sa petite dimension du plan.

2. Feuille de verre trempée suivant la revendication 1, caractérisée en ce que la flèche du bombé est de 1,8 à 2,2% de la petite dimension du plan.

3. Feuille de verre trempée suivant la revendication 1 ou 2, caractérisée en ce que le bombé présente un rayon de courbure essentiellement uniforme sur la totalité de sa surface.

4. Feuille de verre trempée suivant l'une quelconque des revendications 1 à 3, caractérisée en ce que les dimensions du plan de la feuille de verre sont supérieures à environ 40×40 cm.

5. Feuille de verre trempée suivant la revendication 4, caractérisée en ce que ses dimensions dans le plan sont comprises entre environ 60 et 140 cm.

6. Feuille de verre trempée suivant l'une quelconque des revendications 1 à 5, caractérisée en ce que sa zone de bordure périphérique plane a une largeur d'environ 2 à 3 cm.

7. Feuille de verre trempée suivant l'une quelconque des revendications 1 à 6, caractérisée en qu'elle est plus fortement trempée dans sa zone de bordure que dans sa zone centrale.

8. Feuille de verre trempée suivant la revendication 7, caractérisée en ce que la trempe est de 12 000 à 13 500 N/cm² dans la zone de bordure et de 7 000 à 9 000 N/cm² dans la zone centrale.

9. Feuille de verre trempée suivant l'une quelconque des revendications 1 à 8, caractérisée en ce que son épaisseur est de 3 à 6 mm.

10. Feuille de verre trempée suivant l'une quelconque des revendications 1 à 9, caractérisée en ce qu'elle est utilisée comme vitre pour des véhicules automobiles et des cabines de protection.

11. Feuille de verre trempée suivant la revendication 10, caractérisée en ce que son bombé est monté vers l'extérieur.

12. Feuille de verre trempée suivant la revendication 10 ou 11, caractérisée en ce qu'elle est utilisée comme vitre sans cadre ouvrable.

13. Dispositif pour fabriquer une feuille de verre au silicate bombée suivant l'une quelconque des revendications 1 à 9 dans lequel les deux outils presseurs (2, 3) pouvant être déplacés l'un vers l'autre comprennent chacun une plaque de base rigide (5, 15) et un cadre de moulage (7, 17) qui y est fixé et qui présente une surface de pressage plane, les deux surfaces de pressage des cadres de moulage (7, 17) coïncidant l'une avec l'autre et attaquant la périphérie de la feuille de verre (1) et dans lequel entre la plaque de base (15) et le cadre de moulage (17) d'un des outils presseurs (3), est disposé un outil de cambrage (22) pouvant se déplacer perpendiculairement à la feuille de verre (1), la surface de cambrage de cet outil pouvant sortir au moins partiellement du plan de contact entre le cadre de moulage (17) et la feuille de verre (1), caractérisé en ce que les cadres de moulage (7, 17) sont fixés aux plaques de base (5, 15) chaque fois par l'intermédiaire d'organes d'entretoisement réglables (goujons 6, 16) et l'outil de cambrage (22) déplaçable peut être déplacé sur des guides (douilles 24, goujons 23) entre duex positions d'extrémité fixées par des bagues de butée (25, 26) montées sur les goujons (23).

14. Dispositif suivant la revendication 13, caractérisé en ce que les surfaces de contact (9, 19) des cadres de moulage (7, 17) ont une largeur (B) de 5 à 25 cm.

15. Dispositif suivant la revendication 13 ou 14, caractérisé en ce que l'outil de cambrage (22) a la forme d'une plaque rigide présentant une surface en forme de calotte.

16. Dispositif suivant l'une quelconque des revendications 13 à 15, caractérisé en ce que les bagues de butée (26) déterminant la position d'extrémité antérieure de l'outil de cambrage rigide (22) sont montées de manière à pouvoir être déplacées sur les goujons (23).

17. Dispositif suivant l'une quelconque des revendications 13 à 16, caractérisé en ce qu'un vérin (30) ou un coussin dont le volume augmente lorsqu'il est alimenté en air comprimé est prévu entre l'outil de cambrage (22) rigide et la plaque de base (15) pour déplacer l'outil de cambrage (22) rigide dans la position d'extrémité antérieure.

18. Dispositif suivant la revendication 17, caractérisé en ce que, pour déplacer l'outil de cambrage (22) rigide dans la position d'extrémité postérieure, des ressorts de traction attaquant l'outil de cambrage (22) et la plaque de base (15) sont prévus.

19. Dispositif pour fabriquer une feuille de verre au silicate bombée suivant l'une quelconque des revendications 1 à 9 dans lequel les deux outils presseurs (2, 3) pouvant être déplacés l'un vers l'autre comprennent chacun une plaque de base (5, 15) rigide et un cadre de moulage (7, 17) qui y est fixé et qui présente une surface de pressage plane, les deux surfaces de pressage des cadres de moulage (7, 17) coïncidant l'une avec l'autre et attaquant la périphérie de la feuille de verre (1), et dans lequel, entre la plaque de base (15) et le cadre de moulage (17) d'un des outils presseurs (3), est disposé un outil de cambrage pouvant être déplacé perpendiculairement à la feuille de verre (1), sa surface de cambrage pouvant sortir au moins partiellement du plan de contact entre le cadre de moulage (17) et la feuille de verre (1), caractérisé en ce que les cadres de moulage (7, 17) sont fixés à la plaque de base (5, 15) chaque fois par l'intermédiaire d'organes d'entretoisement réglables (goujons 6, 16), l'outil de cambrage déplaçable est constitué d'un coussin (35) dont le volume augmente lorsqu'il est alimenté en air comprimé et qui présente une paroi d'about (36) flexible et, pour limiter le déplacement de la paroi d'about flexible (36), sont prévus une valve de détente (38) réglable qui règle la pression de l'aire et un dispositif à temps (39) réglable qui détermine la durée d'application de la pression dans la conduite d'alimentation d'air comprimé.

**Claims**

1. A tempered silicate glass plate, curved along its two edgewise dimensions so as to be for example spherical and having its skirting edge parts in a single plane, characterized in that the camber of the curved form is equal to about 0.5 to 3.0% of the smaller edgewise dimension of the glass plate.

2. A tempered glass plate as claimed in claim 1, characterized in that the camber of the curved form is 1.8 to 2.2% of the smaller edgewise dimension of the glass plate.

3. A tempered glass plate as claimed in claim 1 or claim 2, characterized in that over the full face of the glass plate the curved form has a generally unchanging radius of bending.

4. A tempered glass plate as claimed in anyone of claims 1 to 3, characterized in that the edgewise dimensions of the glass plate are larger than about 40×40 cm.

5. A tempered glass plate as claimed in claim 4, characterized in that the edgewise dimensions of the glass plate are between about 60 and 140 cm.

6. A tempered glass plate as claimed in anyone of claims 1 to 5, characterized in that its flat skirting edge parts placed round it have a breadth of about 2 to 3 cm.

7. A tempered glass plate as claimed in anyone of claims 1 to 6, characterized in that in its skirting edge parts the glass plate has a higher degree of prestressing than in the middle part thereof.

8. A tempered glass plate as claimed in claim 7, characterized in that the degree of prestress in the edge part is 12 000 to 13 500 $N/cm^2$ and in the middle part is 7 000 to 9 000 $N/cm^2$.

9. A tempered glass plate as claimed in anyone of claims 1 to 8, characterized by its being 3 to 6 mm thick.

10. The use of a tempered glass plate as claimed in anyone of claims 1 to 9, as a window for motorvehicles and shielding cabins.

11. The use of a tempered glass plate as claimed in claim 10, characterized in that the glass plate is placed in position so as to be outwardly curved.

12. The use of a tempered glass plate as claimed in claim 10 or claim 11 as a frameless glass plate which may be folded open.

13. An apparatus for producing a curved silicate glass plate as claimed in anyone of claims 1 to 9 in the case of which the two pressing tools (2, 3), able to be moved towards each other, in each case have a stiff base-plate (5, 15) and, fixed thereto, a frame mold (7, 17) with a flat pressing face, in the case of which the two pressing faces of the frame molds (7, 17) are lined up with each other for covering the same face and designed to take effect on the edge of the glass plate (1), and in the case of which between the base-plate (15) and the frame mold (17) of one of the press tools (3) there is a bending tool (22) able to be moved in relation to the frame mold (17) normally towards the glass plate (1), and the bending face of the bending tool (22) is able to come out, at least in part, of the contact plane between the frame mold (17) and the glass plate (1), characterized in that the frame molds (7, 17) are, in each case, fixed to the base-plate (5, 15) by way of an adjustment spacer (pins 6, 16) and in that the sliding bending tool (22) is able to be moved on guides (bushes 24, pins 23) between two end positions as limited by two stop rings (25, 26) placed on the pins (23).

14. An apparatus as claimed in claim 13, characterized in that the contact faces (9, 19) of the frame molds (7, 17) have a breadth (B) of 5 to 25 cm.

15. An apparatus as claimed in claim 13 or claim 14, characterized in that the bending tool (22) takes the form of a stiff plate with a face like part of a ball.

16. An apparatus as claimed in anyone of claims 13 to 15, characterized in that the stop rings (26) fixing the front end position of the stiff bending tool (22) are positioned for adjustment on the pins (23).

17. An apparatus as claimed in anyone of claims 13 to 16, characterized in that for moving the stiff bending tool (22) into the front end position a pressure cylinder (30) or a cushion increasing in size on being acted upon by compressed air, is placed between the stiff bending tool (22) and the base-plate (15).

18. An apparatus as claimed in claim 17, characterized in that for moving the stiff bending tool (22) into the back end position tension springs (31) are placed for taking effect on the bending tool (22) and on the base-plate (15).

19. An apparatus for producing a curved silicate glass plate as claimed in anyone of claims 1 to 9 in the case of which the two pressing tools (2, 3), able to be moved towards each other, in each case have a stiff base-plate (5, 15) and, fixed thereto, a frame mold (7, 17) with a flat pressing face, and the two pressing faces of the frame molds (7, 17) are lined up with each other in area and designed to take effect against the edge of the glass plate (1) and in the case of which between the base-plate (15) and the frame mold (17) of one of the pressing tools (3) there is a bending tool, able to be moved in relation to the frame mold (17) normally to the glass plate (1), its bending face being able to be moved out, at least in part, from the plane of contact between the frame mold (17) and the glass plate (1), characterized in that the frame molds (7, 17) are fixed to the base-plate (5, 15) in each case by adjustment spacers (pins 6 and 16), in that the moving bending tool is made up of a cushion (35) increasing in size on being acted upon by compressed air, with a flexible wall (36) and in that, for limiting the motion of the flexible wall (36) there is, in the compressed air supply line, an adjustable reducing valve (38) for regulation of the air pressure and an adjustable timer (39), fixing the time in which the pressure takes effect.

Fig. 1

**Fig. 2**